# FASCICULE DE BREVET EUROPEEN

(11) **EP 1 462 208 B1**
(45) Date de publication et mention de la délivrance du brevet: **21.12.2005**
(21) Numéro de dépôt: 04354014.5
(22) Date de dépôt: 18.03.2004
(51) Int. Cl.: B23P 15/00, F16B 37/06, B21K 1/60, B21K 1/70

(54) **Procédé de fabrication d'un écrou noyé à sertir et écrou noyé à sertir réalisé par un tel procédé**
Verfahren zur Herstellung einer Krimpmutter und durch dieses Verfahren hergestellte Krimpmutter
Process for manufacturing a clinch nut, and clinch nut thus obtained

(30) Priorité: 24.03.2003 FR 0303555
(43) Date de publication de la demande: 29.09.2004
(73) Titulaire: Bollhoff Otalu S.A., 73490 La Ravoire (FR)
(72) Inventeur: Brun, Patrice, 73160 Saint Cassin (FR)
(74) Mandataire: Hecké, Gérard

(56) Documents cités:
- WO-A-02/38329
- US-A- 3 279 304
- US-A- 5 213 460

## Description

### Domaine technique de l'invention

L'invention concerne un procédé de fabrication d'un écrou noyé à sertir comprenant au moins les étapes successives suivantes :
- une pièce brute métallique est coupée et déformée par frappe à froid, de manière à former une ébauche comportant au moins une zone de chambrage,
- un alésage adjacent à la zone de chambrage est formé, par frappe à froid,
- un filetage interne est réalisé dans l'alésage,

### État de la technique

Les écrous noyés à sertir comportent une zone de chambrage suffisamment plastique et ductile pour être déformée de manière symétrique lors de la pose de l'écrou sur un élément de fixation et une zone taraudée suffisamment résistante pour pouvoir subir sans déformation les charges appliquées par une vis, la vis étant vissée dans la zone taraudée de l'écrou de manière à solidariser une pièce sur l'élément de fixation.

Il est connu de réaliser un traitement thermique par recuit pour rendre la zone de chambrage plus ductile et plus plastique que le reste de l'écrou noyé à sertir.

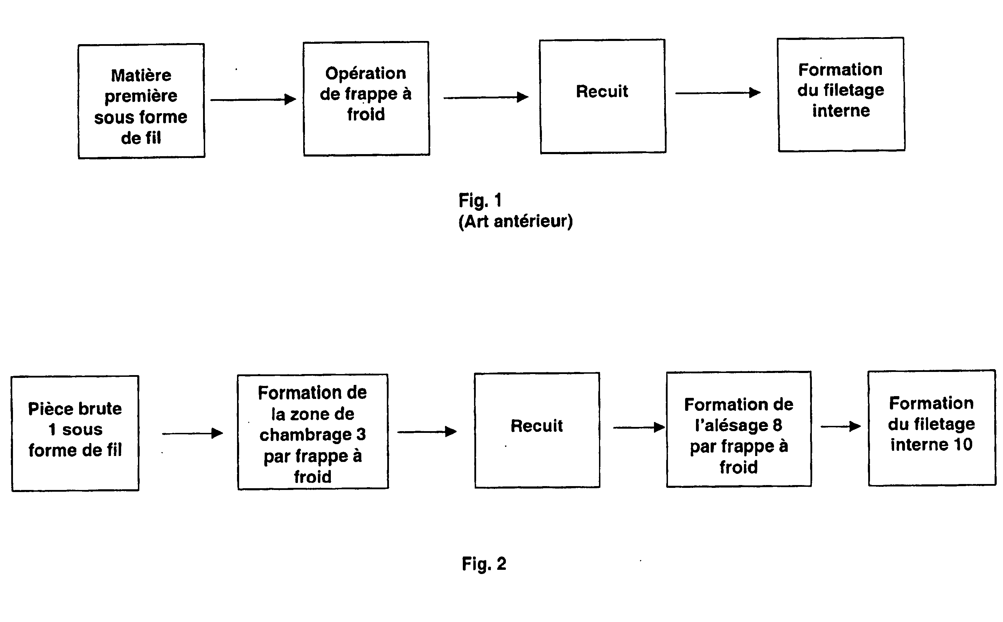

Ainsi, le document WO 02/38329 décrit un procédé de fabrication d'un écrou à sertir dans lequel un recuit localisé est réalisé sur une partie appropriée de l'écrou de manière à améliorer sa déformation pendant son installation. Ce document mentionne également la possibilité de réaliser la forme de l'écrou noyé à sertir par façonnage à froid continu et de réaliser un recuit avant de former le filetage interne (figure 1). Le fait de réaliser le filetage interne après le recuit permet, par effet d'écrouissage, de durcir localement la zone filetée. Le filetage de ces écrous noyés à sertir n'est, cependant, pas suffisamment résistant pour certaines applications dans les structures de voiture ou les éléments de sécurité dans une voiture, par exemple. En effet, ils ne sont pas compatibles avec certaines classes de vis référencées par la norme ISO 898-1.

### Objet de l'invention

L'invention a pour but de réaliser un écrou noyé à sertir comportant une zone taraudée capable de résister à des charges élevées sans se déformer tout en conservant une zone de chambrage ductile et plastique.

Selon l'invention, ce but est atteint par le procédé selon la revendication 1, en particulier par le fait que l'ébauche subit un traitement thermique par recuit entre la formation de la zone de chambrage et la formation de l'alésage.

Selon un développement de l'invention, l'ébauche est réalisée par estampage puis par filage.

Selon un mode de réalisation préférentiel, l'alésage est réalisé par filage.

Selon une autre caractéristique de l'invention, le filetage interne est réalisé par taraudage par refoulement de matière.

Avantageusement un écrou noyé à sertir est obtenu par le procédé de fabrication décrit ci-dessus et comporte une zone taraudée et une zone de chambrage, le rapport de la dureté Vickers de la zone de chambrage sur la dureté Vickers de la zone taraudée étant sensiblement compris entre 0,40 et 0,75.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 est une représentation schématique d'un procédé de fabrication d'un écrou noyé à sertir selon l'art antérieur.
La figure 2 est une représentation schématique d'un procédé de fabrication d'un écrou noyé à sertir selon l'invention.
Les figures 3 à 6 représentent, en coupe, différentes étapes du procédé de fabrication selon la figure 2.
La figure 7 représente, en coupe partielle, un écrou noyé à sertir obtenu par un procédé de fabrication selon l'invention.
La figure 8 est une vue en coupe partielle d'un écrou noyé à sertir obtenu par un procédé de fabrication selon l'invention, installé sur un élément de fixation.

### Description de modes particuliers de réalisation.

Comme représenté à la figure 2, un procédé de fabrication d'un écrou noyé à sertir consiste à former, par frappe à froid, une zone de chambrage 3 dans une pièce brute métallique 1, par exemple un fil rond, de manière à obtenir une ébauche. L'ébauche subit ensuite un traitement thermique par recuit puis une opération de frappe à froid permettant de former un alésage 8 destiné à contenir un filetage interne 10. Le filetage interne 10 est réalisé, de préférence, par taraudage par refoulement de matière de l'alésage 8 de l'ébauche. L'opération de frappe à froid, dans le procédé de fabrication représenté à la figure 2, est discontinue, un recuit étant réalisé avant la formation de l'alésage et après la formation de la zone de chambrage, tandis que le procédé de fabrication représenté à la figure 1 consiste à réaliser la zone de chambrage et l'alésage dans une même opération de frappe à froid continue.

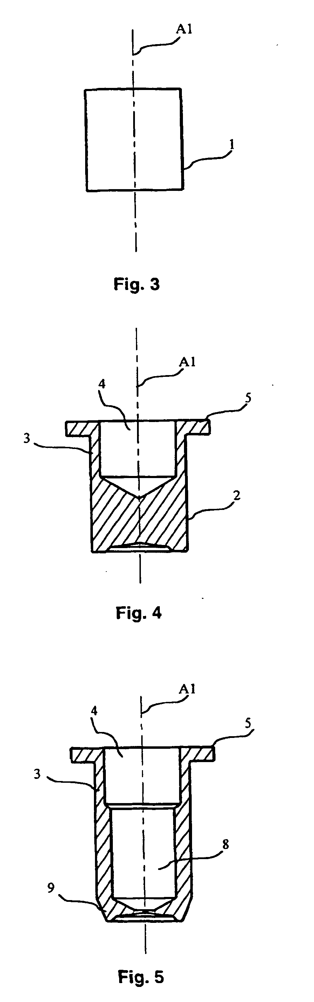

Selon un mode particulier de réalisation représenté aux figures 3 à 6, la pièce brute 1 est cylindrique, avec un axe de symétrie A1 (figure 3), et elle est, de préférence, en acier, en acier inoxydable, en aluminium ou en laiton. Elle est coupée et déformée en plusieurs étapes successives par frappe à froid, sur une machine de frappe à froid, de manière à former la zone de chambrage 3. Par frappe à froid, on entend une opération permettant de déformer une pièce brute à froid ou à « mi-chaud », contrairement à une déformation à chaud pour laquelle la pièce brute est chauffée pour passer par un état intermédiaire pâteux, (situé avant le point de fusion pour les métaux), de manière à la rendre plus malléable pour la déformer. Ainsi, une pièce brute en acier inoxydable subit une opération de frappe à mi-chaud.

A titre d'exemple, au cours de l'opération de frappe à froid, une étape d'estampage puis une étape de filage permettent de réaliser une ébauche 2 comportant, dans sa partie supérieure, la zone de chambrage 3 et une cavité 4 débouchant sur l'extrémité supérieure de l'ébauche 2 (figure 4). En déformant la pièce brute, il se forme à l'extrémité supérieure de l'ébauche 2, une bordure périphérique faisant saillie vers l'extérieur. Cette bordure périphérique est ensuite calibrée pour former la tête 5 de l'écrou noyé à sertir. Sur la figure 4, la tête 5 de l'écrou noyé à sertir est formée pendant l'opération de frappe à froid destinée à former la zone de chambrage 3. La forme de la tête 5 peut être plate, fine, fraisée, réduite ou tout autre forme.

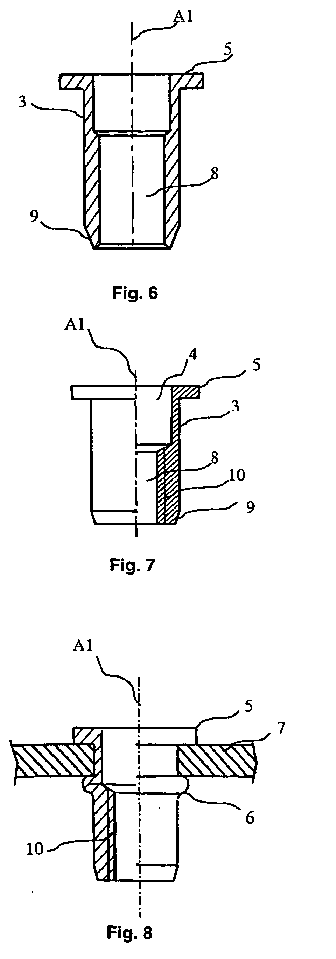

La frappe à froid ayant pour conséquence de durcir la zone de chambrage 3 par effet d'écrouissage, l'ébauche 2 est soumise à un traitement thermique par recuit qui permet de rendre la zone de chambrage ductile et plastique. Lors de l'utilisation de l'écrou noyé à sertir, la zone de chambrage 3 peut, alors, se déformer, de manière symétrique, sous l'action d'une force axiale appliquée par un outil de pose. La zone de chambrage 3 se déforme en un bourrelet 6 qui maintient la tête 5 de l'écrou noyé à sertir contre un élément de fixation 7, qui peut être, par exemple, métallique ou en matière plastique (figure 8). A titre d'exemple, le traitement thermique par recuit est réalisé à une température de l'ordre de 800°C, dans un four pour un écrou à sertir en acier.

Une fois l'ébauche 2 refroidie, celle-ci est replacée sur une machine de reprise qui peut être une machine de frappe à froid, de manière à former dans la partie inférieure de l'ébauche 2, par frappe à froid, un alésage 8 adjacent à la zone de chambrage 3 et prolongeant co-axialement la cavité 4 (Figure 5). Ceci a pour effet de durcir localement l'alésage 8 par effet d'écrouissage. L'alésage 8 et la zone de chambrage 3 forment le fût de l'écrou noyé à sertir. L'alésage 8 est, de préférence, réalisé par filage puis par perçage du fond du fût de l'écrou (figure 6) de manière à former un fût ouvert. Sur les figures 5 et 6, l'extrémité libre du fût comporte un chanfrein 9 de forme tronconique et faisant un angle voisin de 15° par rapport à l'axe de symétrie A1 de l'écrou. Le fût peut également être borgne et dans ce cas, l'opération de perçage n'est pas réalisée.

Le filetage interne 10 est ensuite formé par taraudage par refoulement de matière de l'alésage 8 de l'écrou noyé à sertir. La formation du filetage interne 10 permet de durcir localement l'alésage 8, par effet d'écrouissage, tout en conservant la ductilité et la plasticité de la zone de chambrage 3. L'écrou noyé à sertir ainsi formé (figure 7) peut ensuite subir un traitement de surface qui est de préférence, un traitement anti-corrosion.

Un écrou noyé à sertir réalisé par un tel procédé comporte une zone taraudée constituée par l'alésage 8 et le filetage interne 10 et ayant une dureté nettement supérieure à celle de la zone de chambrage 3. Ainsi, le rapport de la dureté Vickers de la zone de chambrage 3 de l'écrou sur la dureté Vickers de la zone taraudée est sensiblement compris entre 0,40 et 0,75. La dureté de la zone taraudée est, alors, 1,33 à 2,5 fois supérieure à celle de la zone de chambrage 3, le rapport variant selon la composition et le type d'écrou réalisé.

A titre de comparaison, des essais de dureté ont été réalisés pour des écrous de type M6 selon la norme ISO 898-2, en acier standard et fabriqués selon le procédé décrit à la figure 1 et par le procédé de fabrication selon l'invention (figure 2). Le rapport moyen de la dureté Vickers de la zone de chambrage 3 sur la dureté Vickers de la zone taraudée est, dans le cas des écrous fabriqués selon l'art antérieur, sensiblement de 0,8 tandis que, pour des écrous fabriqués selon l'invention, le rapport moyen est sensiblement de 0,55. De même, pour des écrous en aluminium de type M6, le rapport de dureté est de 0,95 pour le procédé selon l'art antérieur et de 0,72 pour le procédé selon l'invention.

Des essais de dureté ont, également, été réalisés pour des écrous de type M8 et M10 en acier, réalisés par un procédé selon l'art antérieur et par un procédé selon l'invention décrit à la figure 2. Pour les écrous de type M8, le rapport moyen de dureté de la zone de chambrage 3 sur la dureté de la zone taraudée est de 0,8 pour le procédé selon l'art antérieur et de 0,5 pour le procédé selon l'invention. Pour les écrous de type M10, le rapport moyen de dureté de la zone de chambrage 3 sur la dureté de la zone taraudée est de 0,72 pour le procédé selon l'art antérieur et de 0,53 pour le procédé selon l'invention. Pour les écrous de type M12, le rapport moyen de dureté de la zone de chambrage 3 sur la dureté de la zone taraudée est de 0,97 pour le procédé selon l'art antérieur et de 0,59 pour le procédé selon l'invention. Pour les différents types d'écrous, le gain de dureté obtenu pour la zone taraudée 3 d'un écrou à sertir mis en oeuvre selon l'invention par rapport à la zone de chambrage de l'écrou est supérieur à celui obtenu pour un écrou à sertir réalisé selon l'art antérieur.

Ainsi, l'écrou noyé à sertir réalisé par un tel procédé peut être utilisé avec des vis de qualité supérieure. Un écrou noyé en acier réalisé par un tel procédé est compatible au minimum avec une vis 10.9 selon la norme ISO 898-1 tandis qu'un écrou noyé à sertir en acier réalisé par un procédé selon l'art antérieur est seulement compatible avec une vis 8.8. De même, des écrous en aluminium et en laiton réalisés par un procédé selon l'invention sont respectivement compatibles au minimum avec des vis 6,8 et 8.8 selon la norme ISO 898-1 tandis que des écrous en aluminium et en laiton réalisés par un procédé selon l'art antérieur sont compatibles avec des vis de classes inférieures, et notamment avec des vis 4.8 et 6.8.

L'invention n'est pas limitée aux modes de réalisation décrits ci-dessus. La tête 5 de l'écrou noyé à sertir peut, par exemple, être formée pendant la formation de l'alésage 8 au lieu d'être réalisée pendant la formation de la zone de chambrage 3. Le fût de l'écrou noyé à sertir peut être de tout type, notamment cylindrique, lisse ou moletée ou de section polygonale.

## Revendications

1. Procédé de fabrication d'un écrou noyé à sertir comprenant au moins les étapes successives suivantes :
- une pièce brute métallique (1) est coupée et déformée par frappe à froid, de manière à former une ébauche (2) comportant au moins une zone de chambrage (3),
- un alésage (8) adjacent à la zone de chambrage (3) est formé, par frappe à froid,
- un filetage interne (10) est réalisé dans l'alésage (8),
procédé **caractérisé en ce que** l'ébauche (2) subit un traitement thermique par recuit entre la formation de la zone de chambrage (3) et la formation de l'alésage (8).

2. Procédé selon la revendication 1, **caractérisé en ce que** l'ébauche (2) est réalisée par estampage puis par filage.

3. Procédé selon l'une des revendications 1 et 2 **caractérisé en ce que** l'alésage (8) est réalisée par filage.

4. Procédé selon la revendication 3, **caractérisé en ce que** le fond de l'alésage (8) est percé.

5. Procédé selon l'une quelconque des revendications 1 à 4 **caractérisé en ce que** le filetage interne (10) est réalisé par taraudage par refoulement de matière.

6. Procédé selon l'une quelconque des revendications 1 à 5 **caractérisé en ce que** la tête (5) de l'écrou noyé à sertir est formée pendant la formation de l'ébauche (2).

7. Procédé selon l'une quelconque des revendications 1 à 5, **caractérisé en ce que** la tête (5) de l'écrou noyé à sertir est formée pendant la formation de l'alésage (8).

8. Procédé selon l'une quelconque des revendications 1 à 7, **caractérisé en ce qu'**un traitement de surface est réalisé après la formation du filetage interne (10).

9. Procédé selon la revendication 8, **caractérisé en ce que** le traitement de surface est un traitement anti-corrosion.

10. Procédé selon l'une quelconque des revendications 1 à 9, **caractérisé en ce que** la pièce brute métallique (1) est constituée d'un matériau choisi parmi l'acier, l'acier inoxydable, l'aluminium ou le laiton.

## Patentansprüche

1. Verfahren zur Herstellung einer Blindnietmutter, das mindestens folgende aufeinander folgende Schritte umfasst:
- Zuschneiden und Verformung eines metallenen Formlings (1) durch Kaltschlagen, zur Herstellung eines Rohlings (2), der mindestens eine Stauchzone (3) umfasst,
- Herstellung einer an die Stauchzone (3) angrenzenden Bohrung (8) durch Kaltschlagen,
- Herstellung eines Innengewindes (10) in der Bohrung (8),
Verfahren, **dadurch gekennzeichnet, dass** der Rohling (2) zwischen der Herstellung der Stauchzone (3) und der Herstellung der Bohrung (8) einer Wärmebehandlung durch Glühen unterzogen wird.

2. Verfahren nach Anspruch 1, **dadurch gekennzeichnet, dass** der Rohling (2) durch Gesenkschmieden und anschließendes Extrudieren hergestellt wird.

3. Verfahren nach einem der Ansprüche 1 und 2, **dadurch gekennzeichnet, dass** die Bohrung (8) durch Extrudieren hergestellt wird.

4. Verfahren nach Anspruch 3, **dadurch gekennzeichnet, dass** der Boden der Bohrung (8) durchbrochen ist.

5. Verfahren nach einem der Ansprüche 1 bis 4, **dadurch gekennzeichnet, dass** das Innengewinde (10) durch Gewinden durch Materialverdrängung hergestellt wird.

6. Verfahren nach einem der Ansprüche 1 bis 5, **dadurch gekennzeichnet, dass** der Kopf (5) der Blindnietmutter während der Bildung des Rohlings (2) gebildet wird.

7. Verfahren nach einem der Ansprüche 1 bis 5, **dadurch gekennzeichnet, dass** der Kopf (5) der Blindnietmutter während der Herstellung der Bohrung (8) gebildet wird.

8. Verfahren nach einem der Ansprüche 1 bis 7, **dadurch gekennzeichnet, dass** nach der Herstellung des Innengewindes (10) eine Oberflächenbehandlung stattfindet.

9. Verfahren nach Anspruch 8, **dadurch gekennzeichnet, dass** die Oberflächenbehandlung eine Rostschutzbehandlung ist.

10. Verfahren nach einem der Ansprüche 1 bis 9, **dadurch gekennzeichnet, dass** der Metallformling (1) aus einem Material besteht, das aus der von Stahl, Inoxstahl, rostfreiem Stahl und Aluminium oder Messing gebildeten Gruppe ausgewählt ist.

## Claims

1. Manufacturing process of a clinch nut comprising at least the following successive steps :
- a rough metal casting (1) is cut and deformed by cold heading so as to form a rough part (2) comprising at least a recess zone (3),
- a bore (8) adjacent to the recess zone (3) is formed by cold heading,
- an internal thread (10) is made in the bore (8),
process **characterized in that** the rough part (2) undergoes a thermal annealing treatment between formation of the recess zone (3) and formation of the bore (8).

2. Process according to claim 1, **characterized in that** the rough part (2) is achieved by stamping then by extrusion.

3. Process according to one of the claims 1 and 2, **characterized in that** the bore (8) is achieved by extrusion.

4. Process according to claim 3, **characterized in that** the bottom of the bore (8) is drilled.

5. Process according to any one of the claims 1 to 4, **characterized in that** the internal thread (10) is achieved by tapping by material upsetting.

6. Process according to any one of the claims 1 to 5, **characterized in that** the head (5) of the clinch nut is formed during formation of the rough part (2).

7. Process according to any one of the claims 1 to 5, **characterized in that** the head (5) of the clinch nut is formed during formation of the bore (8).

8. Process according to any one of the claims 1 to 7, **characterized in that** a surface treatment is performed after formation of the internal thread (10).

9. Process according to claim 8, **characterized in that** the surface treatment is an anti-corrosion treatment.

10. Process according to any one of the claims 1 to 9, **characterized in that** the rough metal casting (1) is made of a material chosen from steel, stainless steel, aluminium or brass.
